# EUROPEAN PATENT SPECIFICATION

(11) **EP 3 523 224 B1**
(45) Date of publication and mention of the grant of the patent: **20.11.2024**
(21) Application number: 17859099.8
(22) Date of filing: 04.10.2017
(51) Int. Cl.: B65G 21/06, F16B 4/00, F16B 7/04, F16B 17/00, F16B 11/00

(54) **HYGIENIC CONVEYOR FRAME ASSEMBLY**
HYGIENISCHE FÖRDERRAHMENANORDNUNG
ENSEMBLE CADRE DE TRANSPORTEUR HYGIÉNIQUE

(30) Priority: 06.10.2016 US 201662404910 P
(43) Date of publication of application: 14.08.2019
(73) Proprietor: Laitram, LLC, Harahan, LA 70123 (US)
(72) Inventor: KEB, Richard A., Metairie Louisiana 70003 (US); LARSON, Loren O., Harahan Louisiana 70123 (US)
(74) Representative: Forresters IP LLP
(86) International application number: PCT/US2017/055092
(87) International publication number: WO 2018/067673

(56) References cited:
- WO-A1-97/28073
- DE-U- 1 797 649
- GB-A- 1 160 573
- SE-A1- 1 450 060
- US-A- 3 839 766
- US-A1- 2006 254 887
- US-A1- 2011 017 573
- US-A1- 2015 175 360
- US-A1- 2015 175 360
- ANONYMOUS: "Polyethylene - Wikipedia", 25 September 2016 (2016-09-25), XP055689195, Retrieved from the Internet <URL:https://en.wikipedia.org/w/index.php?title=Polyethylene&oldid=741185821#Joining> [retrieved on 20200424]

## Description

### RELATED APPLICATIONS

This application claims priority to US Provisional Patent Application Number 62/404,910, filed October 6, 2016 and entitled "Cleanable Conveyor Frame Assembly".

### BACKGROUND

The invention relates generally to frames for power-driven conveyors and more particularly to belt conveyor frames that are easy to clean.

In the meat, poultry, fruit, and vegetable industries, conveyor belts are used to transport food products. Most conveyor belts are supported along carryways supported by a frame assembly. To meet USDA sanitation requirements, conveyor belt systems must be cleanable. The conveyor carryway and frame are particularly susceptible to the accumulation of fats, dirt, and debris. Complex connections between different components, a large number of components in the frame and carryway, difficult-to-clean crevices and other issues make cleaning conveyor belt systems problematic at times.

Thus, there is a need for an easy-to-clean conveyor belt system.

DE 1797649 U discloses a belt conveyor with a lightweight support frame. In particular, DE 1797649U discloses a conveyor frame, comprising:
- a compression moldable connecting collar comprising a central core and side walls defining a first opening on a first end and a second opening on a second end;
- a first frame component bonded to the compression moldable connecting collar, the second frame component having a rail portion, a first end inserted in the first opening of the connecting collar and a second end; and
- a second frame component bonded to the compression moldable connecting collar, the second frame component having a rail portion, a first end inserted in the second opening of the connecting collar and a second end.

GB 1160573 A discloses conveyor assemblies capable of conveying personnel in opposite direction simultaneously on a conveyor belt.

SE 1450060 A1 discloses a joining arrangement, side plate and splice piece for joining conveyor belt sections.

US 2015/175360 A1 discloses a cleanable belt conveyor and a method for making a cleanable belt conveyor. In particular, US2015175360 A1 discloses a connector for joining components of a conveyor frame, said connector comprising a plug extending from its central core in order to fit in an opening of a frame component.

### SUMMARY

This need and other needs are addressed by a conveyor system embodying features of the invention. A hygienic conveyor frame assembly comprises a plurality of compression molded modular conveyor components melded together through heat and pressure to form a unitary structure.

According to the invention there is provided a conveyor frame as set forth in claim 1

There is also provided a method of joining two conveyor frame components together as recited in claim 7.

In addition according to the invention there is provided a connecting collar for joining a first conveyor frame component to a second conveyor frame component as set forth in claim 9.

Finally, there is provided the use of the connecting collar of the present invention in a conveying frame of the present invention as defined in appended claim 11.

### BRIEF DESCRIPTION OF THE DRAWINGS

These aspects and features of the present disclosure are described in more detail in the following description, and accompanying drawings, in which:
FIG. 1 is an isometric view of an embodiment of a cleanable conveyor frame having an integrated carryway;
FIG. 2 is a front view of the cleanable conveyor frame of FIG. 1;
FIG. 3 shows the conveyor frame of FIG. 1 with a drive mounted;
FIG. 4 show the conveyor frame of FIG. 1 with a conveyor belt;
FIG. 5 is an isometric view of a portion of a cleanable conveyor frame comprising modular conveyor frame components joined using compression molded connecting collars;
FIG. 6 is an isometric view of a connecting collar suitable for joining two modular conveyor frame components together;
FIG. 7 is a cross-sectional top view of the connecting collar of FIG. 6;
FIG. 8 is a front view of the connecting collar of FIG. 6;
FIG. 9 shows a portion of a conveyor frame constructing using a plurality of connecting collars of FIG. 6;
FIG. 10 is a detailed view of Region B of FIG. 9;
FIG. 11 is a cross-sectional view of a connecting collar with a separate plug joining two modular conveyor frame components;
FIG. 12 is a cross-sectional view of a connecting collar with a solid core joining two modular conveyor frame components;
FIG. 13 is a side view of a connecting collar that joins two modular conveyor frame components employing a binding disc;
FIG. 14 shows an embodiment of a modular conveyor frame component having protruding plugs for mating with a connecting collar;
FIG. 15 is a cross-sectional view of a connecting collar with a hollow plug joining two hollow conveyor frame components;
FIG. 16 is a cross-sectional view of a connecting collar with a dowel pin joining two modular conveyor frame components;
FIG. 17 is a detailed view of Region B of FIG. 16;
FIG. 18 is an isometric view of a portion of a conveyor frame including electronic components integrated using compression molded connecting collars;
FIG 19 is a front cross-sectional view of the frame portion of FIG. 18;
FIG. 20 is a cross-sectional front view of a portion of a conveyor frame including a fluid manifold integrated using compression molded connecting collars;
FIG. 21 is a detailed view of an engagement between a modular conveyor frame component having an undercut and a compression molded connecting collar;
FIG. 22 is an isometric view of a cleanable conveyor formed by joining a plurality modular conveyor frame components together;
FIG. 23 is another isometric view of the cleanable conveyor of FIG. 22, showing the seams between the modular conveyor frame components;
FIG. 24 shows the frame of the cleanable conveyor of FIGS. 22 and 23;
FIG. 25 is a detailed view of a portion of the cleanable conveyor of FIG. 23.
FIG. 26 is an isometric view of a rail portion of the cleanable conveyor of FIG. 22
FIG. 27 is a side view of the rail portion of FIG. 26;
FIG. 28 is a front view of the rail portion of FIG. 26;
FIG. 29 is an isometric view of a connecting collar of the cleanable conveyor of FIG. 22
FIG. 30 is a side view of the connecting collar of FIG. 29;
FIG. 31 is a front view of the connecting collar of FIG. 29;
FIG. 32 is an isometric view of a t-shaped connector component for connecting three frame components in a conveyor.
FIG. 33 is a side view of the t-shaped connector component of FIG. 32;
FIG. 34 is a front view of the t-shaped connector component of FIG. 32.

### DETAILED DESCRIPTION

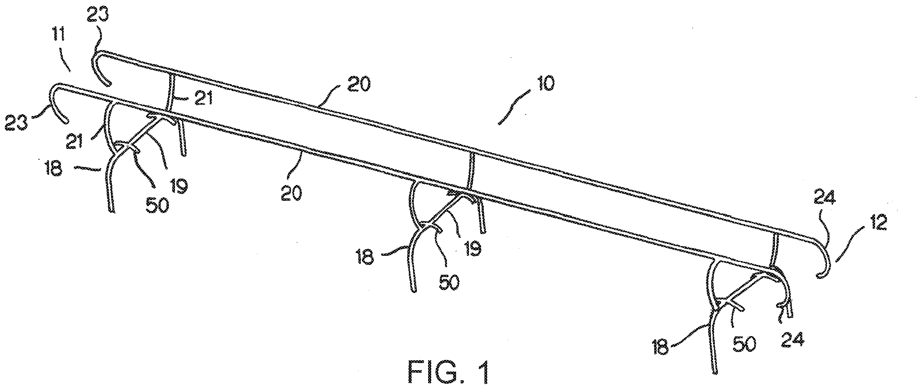

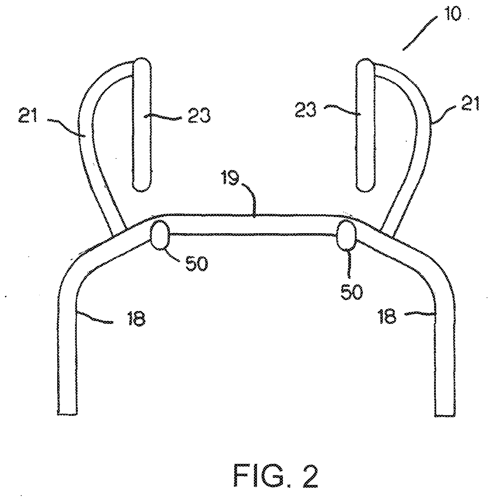

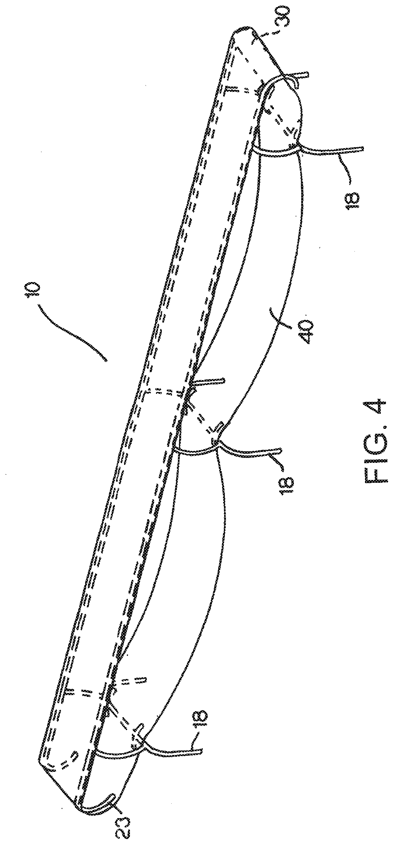

A conveyor frame embodying features of the invention is shown in FIGS. 1-4. The exemplary conveyor frame 10 supports a conveyor belt 40 (shown in FIG. 4) traveling between a first end 11 of the frame and a second end 12 of the frame. The conveyor belt conveys products from the first end 11 to the second end 12 along a carryway. The conveyor belt 40 may be trained around reversing elements at each end of the carryway and returned along a returnway below the carryway. The frame 10 minimizes components through simplification and integration to enhance cleanability while ensuring sufficient strength.

The illustrative frame 10 integrates the support structure of the frame with the carryway. The frame 10 includes a pair of legs 18 near ends 11, 12 and, optionally, intermediate points along the frame. Longitudinally-extending rails 20 connect the legs, structurally support the frame 10 and form a carryway for directly supporting the conveyor belt 40 extending from the first end 11 to the second end 12. One or both ends 23, 24 of the longitudinally-extending rails 20 curve, preferably through a 180° arc, to form reversing elements or guide structures for the conveyor belt between the carryway and the returnway. The curved reversing elements formed by the ends 23, 24 are preferably integral with the linear portion of the rails 20, and may be formed by bending the ends to form the desired configuration.

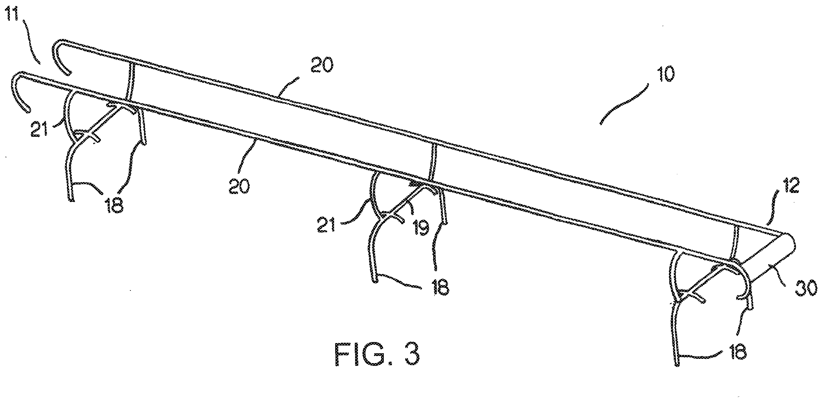

Lateral leg connectors 19 extend between each pair of legs 18. The illustrative legs and lateral leg connectors are formed by upside-down u-shaped rails and include curved upper portions 21 extending upwards from the u-shaped rail. The curved rails 21 forming the upper portions of the legs 18 curve outwards to accommodate the conveyor belt in the returnway. As shown in FIG. 3, a drum motor 30 for driving the conveyor belt 40, shown in FIG. 4, is supported between the curved ends 24 of the longitudinal rails 20 at the second end 12. Curved returnway rails 50 extend from the lateral leg connectors 19 for guiding the conveyor belt in the returnway and extend in the longitudinal direction. The curved returnway rails 50 may be integral with the lateral leg connectors 19 and accommodate sagging of the conveyor belt 40 in the returnway.

While the illustrative legs 18 are substantially vertical in the lower portion, alternatively, the lower leg rails may be curved inwards, or be angled, or have another suitable embodiment.

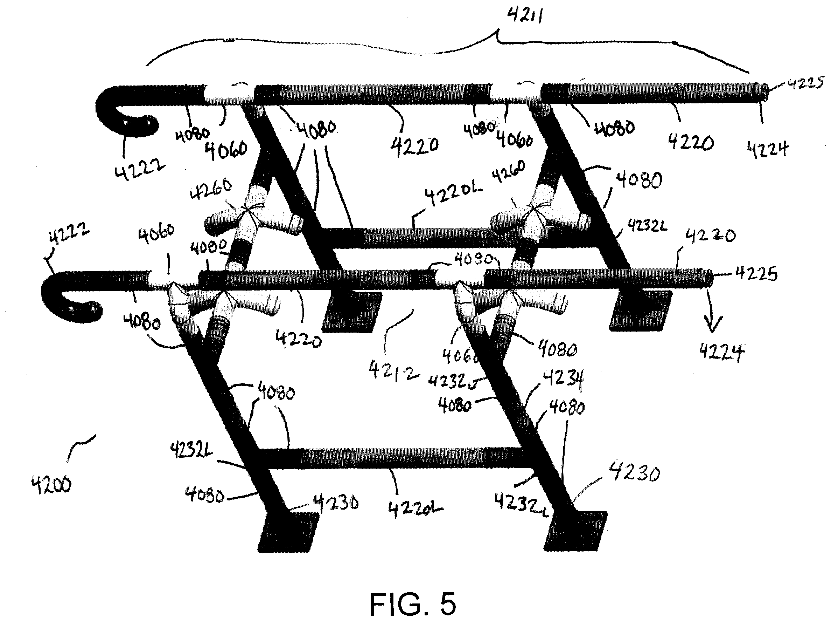

For instance, a conveyor frame can comprise a number of different modular conveyor frame components connected and melded together to form a cleanable, monolithic frame. For example, FIG. 5 shows a portion of a conveyor frame 4200 formed using compression molded connectors to join and bond various components together into a unitary structure.

The components can be arranged in any suitable arrangement or configuration to form the frame or a portion of a frame. For example, the illustrative frame portion 4200 comprises top longitudinally-extending rails 4211, 4212 forming a portion of a carryway, legs connected to the top longitudinally-extending rails and returnway rails, as well as bottom longitudinally-extending rails connecting the legs at a lower portion. The top longitudinally-extending rails 4211, 4220 have ends 4224 configured to connect to another conveyor frame portion or portions to form a complete conveyor frame.

The top longitudinally-extending rails each comprise a first set of standard shafts 4220, bent t-shaped connectors 4060, a curved end extension 4222 and compression molded connecting collars 4080 connecting these modular components. The frame components can have any suitable cross-section, such as, but not limited to, circular, square, rectangular, hexagonal, b-shaped, and so on.

The legs comprise bases 4230 connected to a lower straight t-shaped connectors 4232L using a connecting collar 4080, a central shaft 4234 connected to the lower straight-t-shaped connector using another connecting collar 4080, an upper straight t-shaped connector 4232U connected to the central shaft 4234 and the downward-extending shaft of the t-shaped leg connector 4060 using compression molded connecting collars 4280. The bases 4230 can comprise any suitable component for stabilizing legs and is not limited to the illustrative example(s) of this disclosure.

The curved returnway rails components 4260 extend between the upper straight t-shaped connectors of two legs and are connected using compression molded connecting collars 4080.

The lower support rails 4220L are connected to t-shaped connectors 4232L using compression molded connecting collars.

The connecting collars 4080 allow joining of the separate components to form a monolithic conveyor frame module 4200. The ends 4224 can be connected to other components using connecting collars. For example, a complete conveyor frame can comprise two portions 4200 joined together. Alternatively, one or more intermediate frame modules, similar to the portion 4200 but without the curved ends 4222, can be inserted between two modules and all the modules connected together for form an extended-length conveyor frame. The various components can comprise different materials, or the same material.

The seams between the different components are exaggerated in FIG. 5. The resulting conveyor frame or portion can be seamless and smooth when finished.

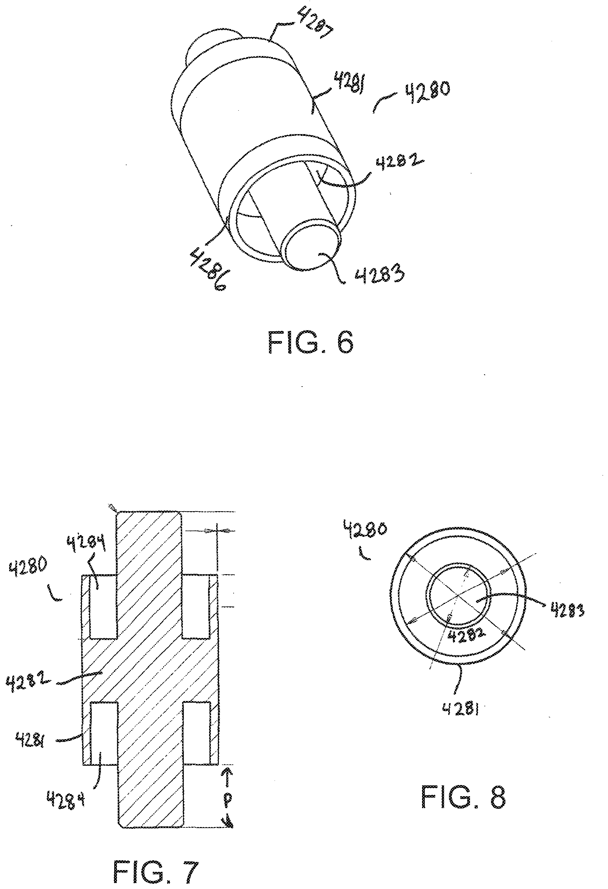

FIG. 6-8 show an embodiment of a compression molded connecting collar 4280 suitable for joining two conveyor components. The collar 4280 comprises a tubular outer wall 4281, a central core 4282 and a plug 4283 comprising a solid shaft extending along the longitudinal axis of the collar. The illustrative outer wall 4281 is tubular to match the shape of the end of the conveyor component to be connected. The plug 4283 extends beyond the cylindrical outer wall by a selected distance P. The collar forms a ring-shaped space 4284 between the plug, cylindrical outer wall and the core for receiving a similarly shaped end of a frame component. The connecting collar 4280 is formed of ultra-high-molecular-weight polyethylene (UHMW) or another suitable compression moldable material. The tubular outer wall is not limited to a cylindrical shape, and can have any suitable shape for receiving an end of a corresponding conveyor component. The tubular outer wall 4281 extends from a first end 4286 to a second end 4287. The first and second 4286, 4287 ends may be tapered to provide a smoother interface with the conveyor frame component when joined.

The modular conveyor frame components can also comprise UHMW, another compression moldable material, or any material capable of bonding with UHMW or another compression moldable material.

Referring back to FIG. 5, the various frame components include ends configured to be received in the connecting collars 4280. For example, the shaft ends 4224 include central openings 4225 for receiving a plug 4283, and the ends 4224 are sized and configured to mate with an end of the connecting collar 4280. In one embodiment, the ends 4224 have a reduced outer diameter forming an end groove or shelf for the cylindrical outer wall of the connecting collar, so that the outer surface of the connecting collar aligns with the outer surface of the main frame component 4220 at a joint between the collar and component. The connecting collar 4280 overlies the ends 4224 of the component.

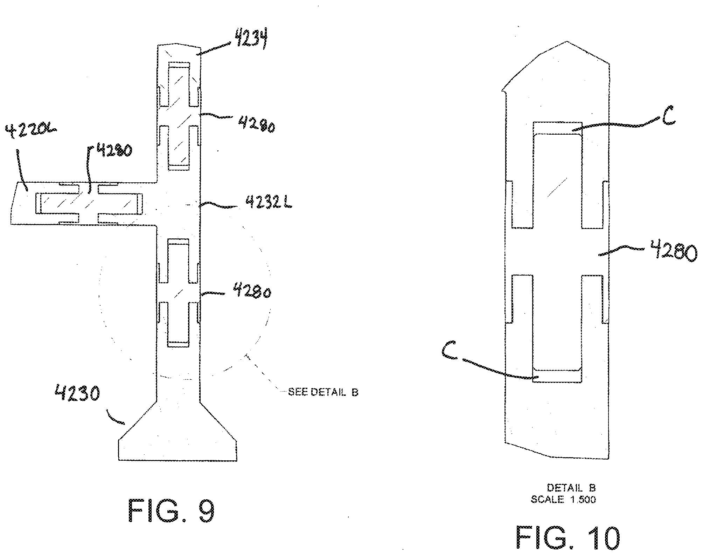

FIG. 9 is a detailed cross-sectional view of the lower portion of a leg of the frame of FIG. 5, showing components 4230, 4232L, 4220L and 4234 joined using compression molded collars 4280. FIG. 10 is a detailed view of region B from FIG. 9. Each component to be joined has a central opening in an end to be joined for receiving a plug of a collar 4280. The central opening is sized to allow clearance C between the end of the plug and end of the central opening to allow expansion of the material.

The connecting collar can have any suitable configuration and shape, with a component to be joined using a connecting collar having complementary geometry so as to allow joining and bonding of the conveyor frame components.

To join two conveyor frame components using the illustrative connecting collar 4280, the connecting collar 4280 is first pre-heated to make it pliable and malleable and suitable for bonding. The components to be joined may be pre-heated as well. Before or after the preheat, the cylindrical outer wall 4281 is slipped over the end of a component to be joined, such as the end 4224, so that the plug 4283 extends into the central opening 4225 of the component. The end of a second component to be joined to the first component is then inserted in the other end of the connecting collar 4280, such that the plug extends into a central opening of the second component. With the collar wrapping the two connecting ends of the components, heat and pressure are applied to bond the connecting collar and two components together, forming a unitary structure. Then, the unitary structure is cooled. In one embodiment, the assembled components are pre-heated in an oven at a temperature between about 170°C (350°F) and about 288°C (550°F) until the cylindrical outer wall 4281 and core 4282 of the connecting collar 4280 are about 100% heat soaked, the conveyor frame component to be joined is between about 60-75% heat-soaked at the joint where it is be connected to the connecting collar and the central plug is about 20-25% heat soaked. The proper amount of heat-soaking can be determined visually, or through another means. For example, a natural UHMW material becomes translucent when it is in a bondable state, while a colored UHMW material will change shades to indicate that the material is heat-soaked and bondable. The material is preferable heated to a bondable state at the interfaces between different components. After heating, pressure is applied to bond and unify the material of the different components to form a unitary structure. In one embodiment, components with a two inch diameter will require between about 275.8 kPa (40 psi) and about 344kPa (50 psi) of pressure, though the amount of pressure can vary based on the materials, size of components and other factors. In another embodiment, the components are partially pre-heated, then a heated die can be used to apply both heat and pressure to form the unitary structure. In another embodiment, pre-heating can be eliminated and only heat and pressure are applied to the components using a die or other suitable device.

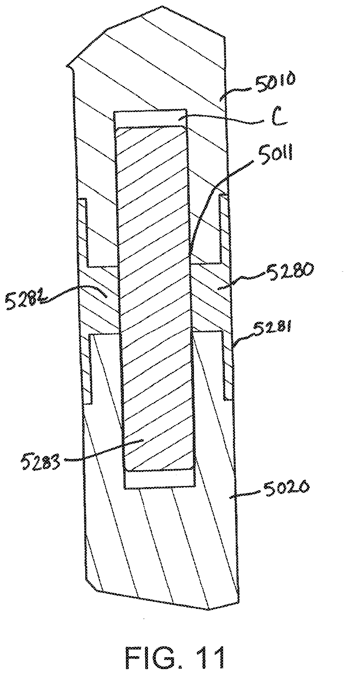

FIG. 11 shows another embodiment of a connecting collar 5280 used to join the ends of two modular conveyor frame components 5010, 5020. The connecting collar 5280 comprises a cylindrical outer wall 5281 and a central core 5282 with a central opening for receiving a separate plug 5283. The plug can be formed of a different material from the connecting collar 5280. The conveyor component 5010 includes an end sized and configured to receive the cylindrical outer wall 5281 and having a central opening 5011 for receiving the plug. The central opening 5011 is sized to allow a bit of clearance C when the end face of the component abuts the central core 5282. The use of a separate plug 5283 in the connecting collar 5280 allows the plug to be formed of a different material. For example, the plug can be steel, aluminum copper, an antimicrobial material or another material while the connecting collar outer wall 5281 and core 5282 are formed of a compression moldable material, such as UHMW. The components 5010, 5280, and 5020 can be melded together through heat and pressure after assembly.

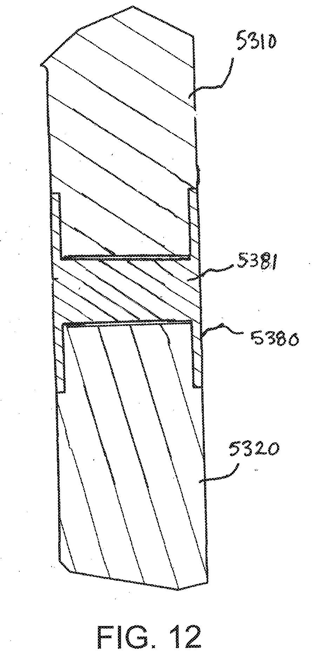

FIG. 12 shows another embodiment of a connecting collar 5380 used to join the ends of two conveyor components 5310, 5320. The connecting collar 5380 has a solid core 5381 and projecting cylindrical walls forming openings that receive the narrowed ends of the conveyor rails 5310, 5320. Heat and pressure are used to bond the components together, as described above.

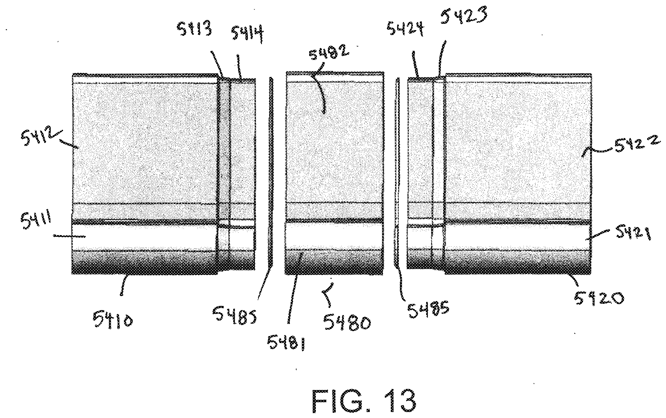

Referring to FIG. 13, in another approach to bonding modular conveyor components together, a bonding disc 5485 can be used to facilitate bonding between a connecting collar 5480 and conveyor components 5410, 5420. The illustrative conveyor components 5410, 5420 comprise a main rail portion 5411, 5421, defining a portion of a carryway of a conveyor, and a side wall portion 5412, 5422 forming a side wall of the carryway, though the invention is not so limited. The connecting collar 5480 also includes a main rail portion 5481 that connects the main rail portions 5411, 5421 and a side wall portion 5481 that connects the side wall portions 5412, 5422. The ends of the illustrative rails 5410, 5420 include a tapering chamfered portion 5413, 5423 and a narrowed portion 5414, 5423 designed to be received in an opening in the connecting collar 5480. The illustrative bonding discs 5485 match the shape of the opening in the connecting collar, though the invention is not so limited. After assembly and during the bonding process, when heat and pressure are applied to the components, the bonding disc, which is formed of an injection moldable material that liquefies when heated, liquefies and fills any voids between the heated, pliable connecting collar 5480 and the ends of the rails 5410, 5420 to promote bonding of the materials. The melted disc takes the shape of the voids, then solidifies upon cooling. Examples of suitable materials for the bonding discs 5485 include, but are not limited to, low-density polyethylene and high-density polyethylene.

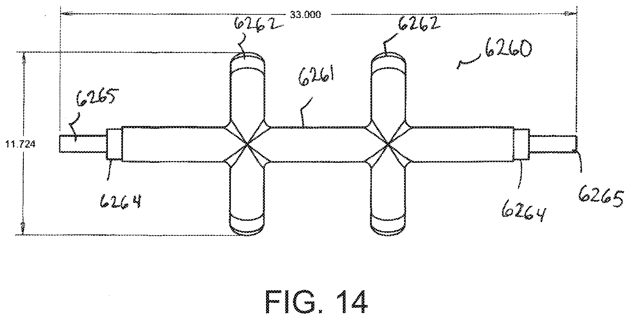

The ends of the component to be joined include protruding plugs and a connecting collar includes an opening in the central core for receiving plugs from two opposing conveyor component. For example, FIG. 14 shows an embodiment of a returnway rails component 6260 comprising a central shaft 6261 that extends between and connects to legs of a conveyor frame and curved returnway rails 6262 extending transverse to the central shaft 6261 for guiding a conveyor belt in a returnway. The ends of the central shaft 6261 include a recessed portion 6264 forming a shelf for a connecting collar outer wall and a protruding plug 6265 configured to be received in a central opening in a core of the connecting collar. A connecting collar, comprising only a cylindrical outer wall and inner core with a central opening can mate with the recessed portion 6264 and protruding plug 6265 at one end and a mating end of another frame component, such as a straight t-shaped connector, at another end to integrate the returnway rails component 6260 into a conveyor frame. Heat and pressure are applied to fully bond the components together.

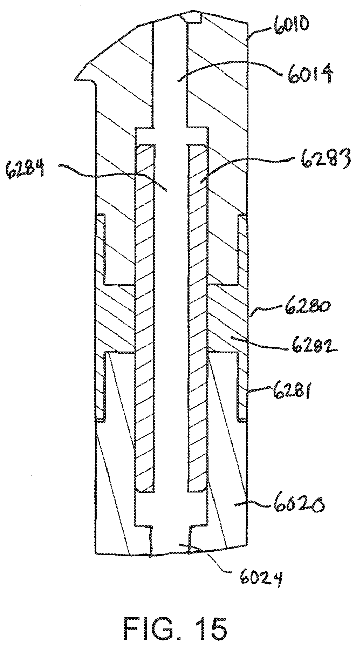

In another example, shown in FIG. 15, one or more of the frame components 6010, 6020, as well as the central plug 6283 extending through a connecting collar 6280 and into the frame components to be connected, can be hollow to allow fluid, wires or another component to pass therethrough. The central plug 6283, which can be integral with or separate from the core and cylindrical outer wall of the collar, includes an opening 6284 extending end-to-end that is in fluid communication with passageways 6014, 6024 of the frame components 6010, 6020. A compression moldable connecting collar 6280 having cylindrical outer walls 6281 and a central core 6282 overlies the ends of the frame components. After pre-heating and assembly, pressure and heat are applied to the connecting collar 6280 and ends of the frame components 6010, 6020 to bond the components together.

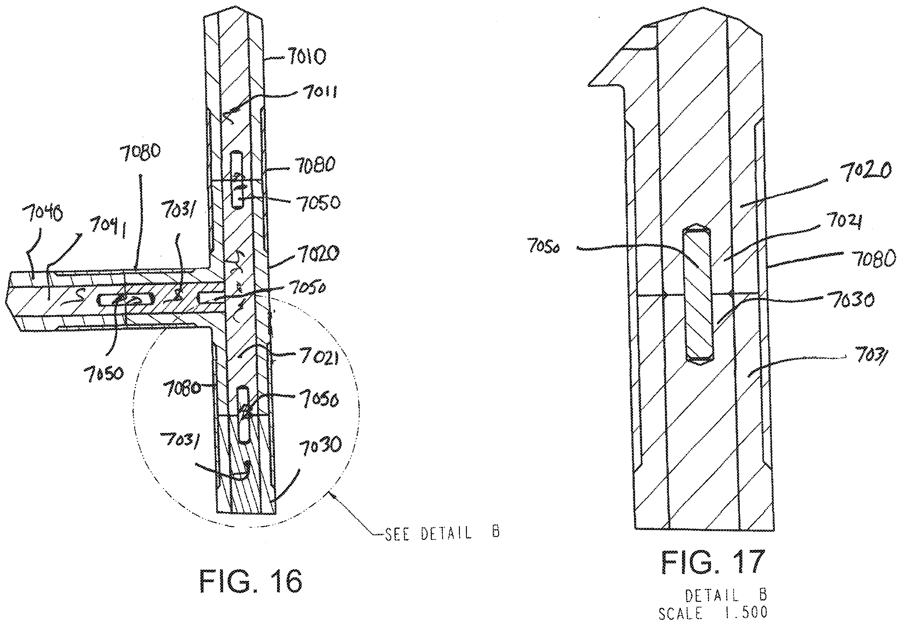

FIGS. 16 and 17 show another example of a connecting collar for connecting two modular conveyor frame components. In the embodiment of FIG. 16, a straight t-shaped component 7020 of a conveyor connects to three shafts 7010, 7030 and 7040 using compression molded connecting collars 7080. The connecting collars 7080 are compression molded cylindrical components that fit over the ends of the shafts. The illustrative components 7010, 7020, 7030, and 7040 also include cores 7011, 7021, 7031, 7041 made of a separate material, such as stainless steel. The cores include central openings in the end faces thereof that receive dowel pins 7050 for connecting the components together. To assemble multiple components together to form a conveyor frame or a portion of a conveyor frame according to the embodiment of FIGS. 16 and 17, the components, cores, pins and connecting collars are assembled as shown in FIG. 16. The assembly is then pre-heated. After pre-heating, heat and pressure are applied at the joints of the various components to bond the materials together. The step of pre-heating may be omitted or occur before assembly.

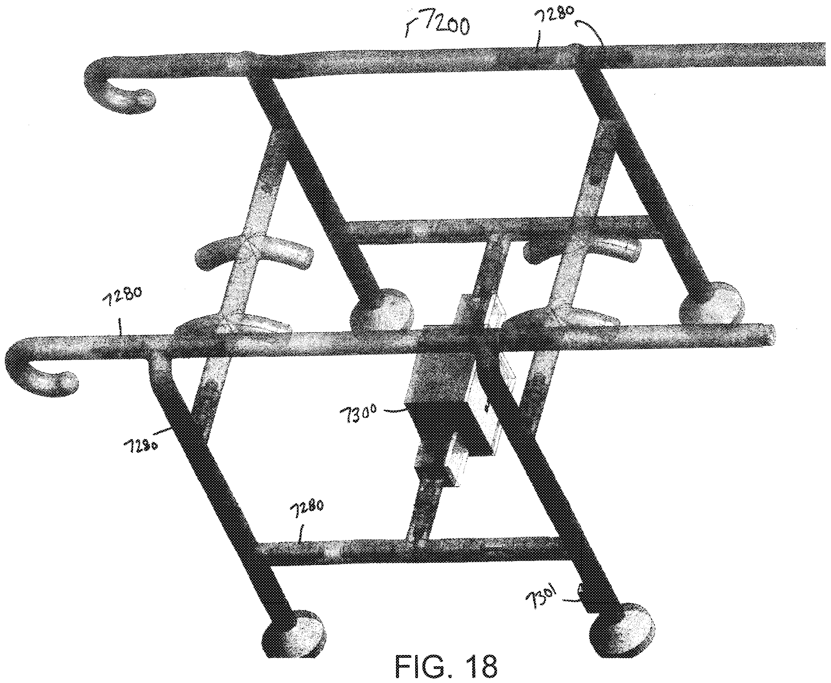

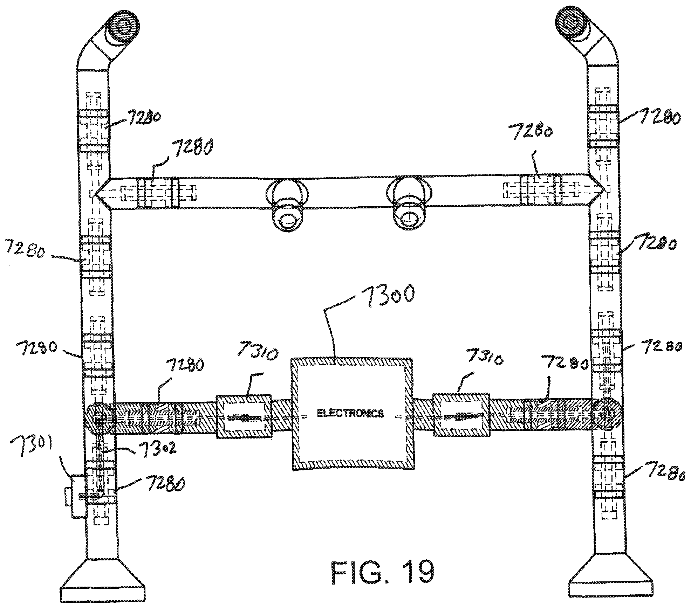

For example, FIGS. 18 and 19 shows an example of a conveyor frame module 7200 including a plurality of components joined using connecting collars 7280, as described above. In addition, the conveyor frame module 7200 integrates an electronic component 7300 using connecting collars 7280. A switch 7301 for the electronic component is attached to a leg of the frame module 7200, and wires 7302 can run through the frame components to the electronic module 7300. The electronics module 7300 can be easily removed from the frame by cutting the module out of the frame and an electronics module can be easily integrated into the frame using connecting collars. For example, the illustrative conveyor frame module 7200 includes connector housings 7310 at each ends of the electronics unit 7300. The connector housings 7310 are bonded to the connecting collars 7280 through the technique described above to integrate the electronics unit 7300 to the conveyor frame module 7200. The electronics module includes electrical connectors housed within the connector housings 7310 that can be removably connected to connectors on the wires 7302 to place the electronics unit in electrical contact with the switch 7301. The electronics unit can be easily removed from the conveyor frame module 7200 by cutting through the connector housings 7310, unplugging the electronics unit and removing the unplugged, disconnected electronics unit. A new or repaired electronics unit can be easily re-integrated into the conveyor frame module.

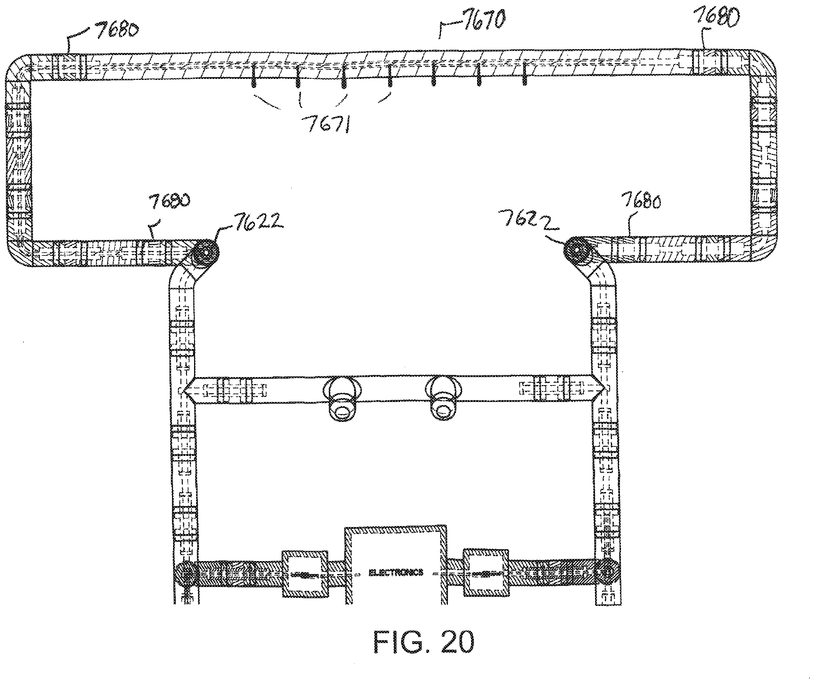

In still another example, connecting collars can be used to integrate fluid manifolds into a conveyor frame. For example, as shown in FIG. 20, an overhead fluid manifold 7670 can be formed over a carryway formed by longitudinal rails 7622. Some or all of the frame components and connecting collars 7680 are hollow to form a fluid path from a fluid inlet to nozzles 7671 in the manifold. The size, shape, configuration and location of the fluid manifold 7670 can be varied depending on the application. For example, the manifold can extend straight up from the carryway using connecting shafts and connecting collars. The fluid manifold can spray air, water or another fluid over the carryway.

A number of conveyor frame components can be arranged in any suitable configuration using compression moldable connecting collars, followed by the application of sufficient heat and pressure to bond the components together.

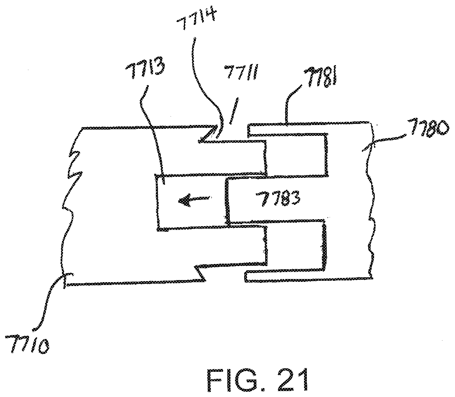

In another example, shown in FIG. 21, a conveyor frame component to be joined using a connecting collar has an undercut edge to facilitate joining of two components. The illustrative conveyor component 7710, which can be a straight, bent or curved shaft, bent or curved t-shaped connector, pipe, electronic box, fluid manifold, or other conveyor component, has a connecting end 7711 configured to engage a connecting collar 7780. The illustrative connecting collar 7780 has an integral plug 7783.

The conveyor component end 7711 has a central opening 7713 for receiving the plug 7783. An edge forming a groove 7714 for receiving the cylindrical wall 7781 of the connecting collar is undercut to facilitate bonding of the connecting collar and conveyor component upon application of heat and pressure. Alternatively, the conveyor component can have a narrowing chamfer, as described above.

A compression molded connecting collar of the invention can be used to join conveyor components to form a sanitary conveyor through different approaches. For example, an entire conveyor frame or a conveyor frame module can be assembled using stock components connected with connecting collars. The assembly can be pre-heated to a bondable state after assembly to make the material malleable. Then, the components are bonded by applying heat and pressure for a select amount of time. In one embodiment, the assembly is heated to about 204°C (400°F).

The heat and pressure causes the materials to unite, bonding the connecting collars to the frame components. Then, the assembly is cooled. In another approach, for example to replace or fix a component in the field, a connecting collar may be pre-heated, then slipped over the end of a component to be joined. A portable heat and pressure device applies heat and pressure to the joint between the connecting collar and component to bond the two together. Then another component can be joined to the other end of the connecting collar in a similar process.

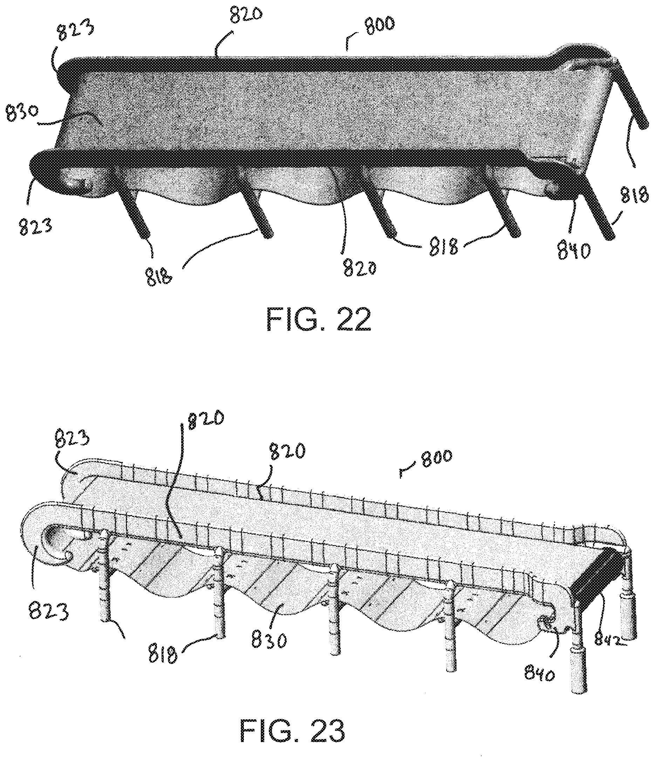

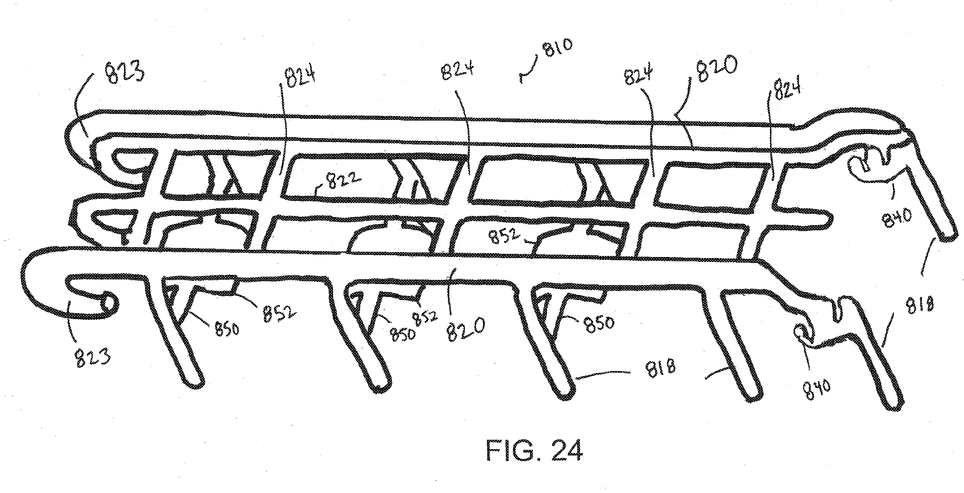

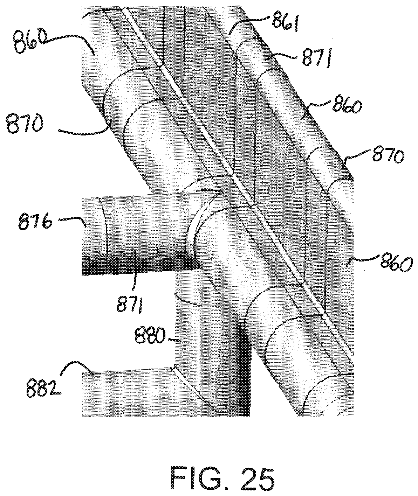

FIG. 22-25 shows another example of a hygienic conveyor 800 comprising a plurality of modular conveyor frame components joined together to form a monolithic structure. FIG. 24 shows the frame with an endless conveyor belt 830. FIG. 25 is a detailed view of a portion of the frame 810. The frame 810 comprises legs 818 connected by longitudinal side rails 820 that form both the carryway edges and structural support. At a drive end, the rails form mounting structure 840 for mounting a drive, shown as a drum motor 842. The mounting structure 840 comprises opposing plates connected to end legs and carryway rails that include slots or other openings for rotatably mounting the drive. At the idle end, the rails 820 curve to form reversing elements 823 for the conveyor belt. The longitudinal carryway rails 820 comprise a base rail portion having side walls and a flat top surface for supporting the conveyor belt, as described below. The frame 810 further includes returnway rails 850 having return shoes 852 extending between pairs of legs 818 for guiding the conveyor belt in the returnway. A central longitudinal rail 822 extends between the side longitudinal rails 820 to provide additional support in the carryway and can be connected to the side longitudinal rails 820 with lateral carryway rails 824.

FIGS. 23 and 25 illustrate the different modular conveyor frame components that are bonded together through compression and heat to form the illustrative monolithic frame structure. The seams between components are for illustration purposes and may or may not be visible in the assembled frame. In the portion of FIG. 25, the longitudinal rails is formed by a plurality of longitudinal rail modules 860 joined by connecting collars 870 or 871. A t-shaped rail portion 861 includes a longitudinal rail portion, side wall and downward extending protrusion for connecting to a leg module 880, which may connect to or include a lateral rail 882. The lateral rail 882 may form or connect to curved returnway rails. Longitudinal and lateral connecting collar 871 connects both longitudinal carryway modules 860, 861 and lateral rail 876 forming a portion of the carryway. Bonding discs, as described above and not visible in the final assembly, may be used to facilitate bonding of the components.

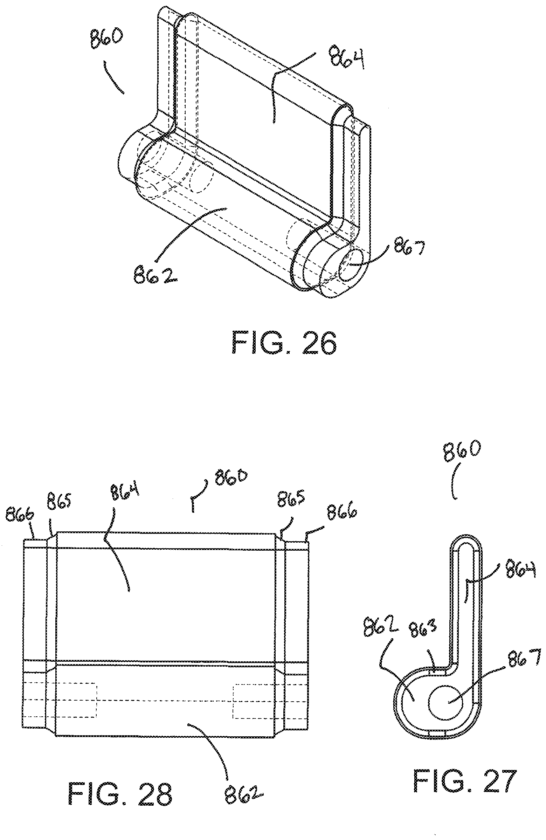

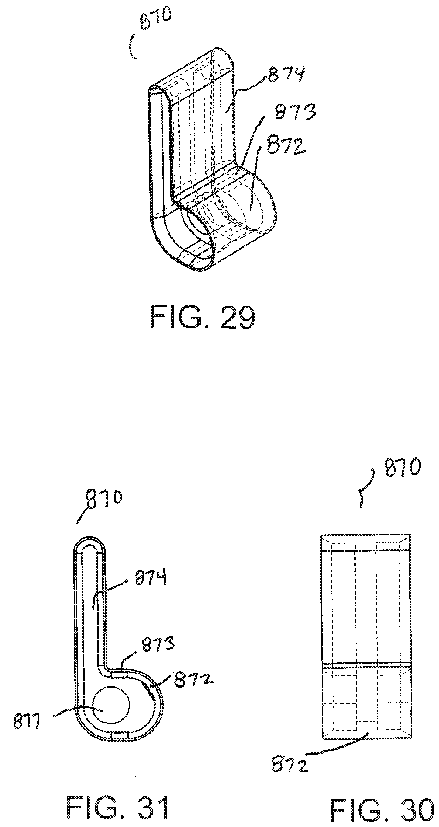

FIGS. 26-28 shows an example of a longitudinal rail module 860 including an integrated side wall suitable for forming a portion of a carryway in a conveyor frame according to an embodiment of the invention. The longitudinal rail module 860 includes a main rail portion 862 having a flat top surface 863 for supporting the conveyor belt and defining the carryway of the conveyor frame. An integral side wall portion 864 extends vertically from the main rail portion for forming a side wall along the edge of the carryway. The ends of the longitudinal rail module include a tapering chamfered portion 865 and a narrowed portion 866 designed to be received in an opening of a corresponding connecting collar, an example of which is shown in FIGS. 29-31. The illustrative longitudinal rail module 860 also includes end openings 867 for receiving a separate plug, but the invention is not so limited, and the plug can be omitted. The longitudinal rail module 860 could include an opening to form a passageway, or be solid.

FIGS. 29-31 show an example of a connecting collar 870 for connecting modules to define at least a portion of a carryway of a conveyor frame. The connecting collar 870 has a profile that matches the profile of the module 860, with a main rounded rail portion 872, flat top surface 873 and a side wall portion 874. The connecting collar includes recesses at each end configured to receive the shaped ends of a conveyor component module, such as the ends 865, 866 of the longitudinal rail module 860, thereby forming a tubular outer wall with a central, solid core between the end openings. The connecting collar 870 also includes central opening 877 for receiving a plug that extends between the connecting collar and another module to be bonded to the connecting collar. The connecting collar can be solid or have a passageway formed therein. After, for example, inserting the ends 865, 866 into the connecting collar 870, heat and pressure are applied to bond the components together. As described above, a bonding disc may be used to facilitate bonding.

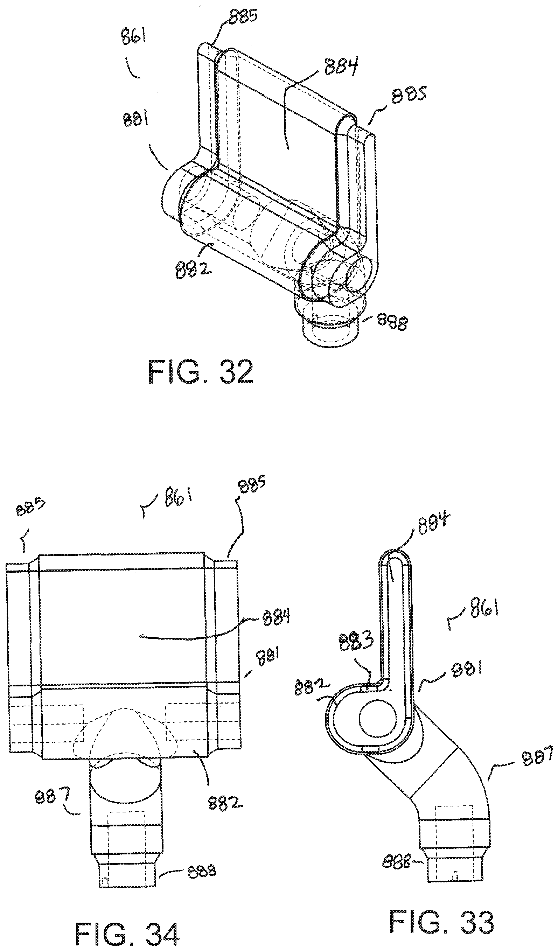

FIGS 32-34 show a "bent T" connector module 861 that is used to form a portion of a carryway in a conveyor frame, as well as connect leg rail modules to a carryway. The illustrative "bent T" connector module 861 includes an upper portion 881 similar to the longitudinal rail module 860. The upper portion includes a main rail portion 882 with flat top surface 883, integral side wall portion 884 and shaped ends 885 for insertion into corresponding receptacles in corresponding connecting collars. The "bent T" connector module 861 further includes a lower portion 887 extending down from the main rail portion 882. The lower portion 887 has a shaped end 888 configured to be received in a connecting collar to form a portion of a leg of a conveyor frame. After connecting the upper portion 881 to other components to form at least a portion of a carryway and the lower portion 887 to other components to form at least a portion of a leg, the assembly can be bonded using heat and pressure. As described above, a bonding disc may be used to facilitate bonding.

While the illustrative compression molded connecting collars are female connectors having receptacles for receiving ends of conveyor frame modules to connect different modules together, alternatively, the connecting collars can have protrusions designed to be inserted in complementary shaped receptacles in an end of a conveyor frame module.

A plurality of various conveyor frame modules can be assembled into a conveyor frame having legs, a carryway, a returnway and other components according to a desired specification. Joints between the modules can be bonded by applying appropriate heat and pressure to meld the materials together, forming a unitary structure. A conveyor frame formed using a plurality of bonded components can have any suitable number and selection of components arranged in any suitable configuration, not limited to those described and shown herein.

## Claims

1. A conveyor frame (4200), comprising:
a compression moldable connecting collar (4280; 5280; 6280; 7780) comprising a central core (4282; 5282; 6282) , side walls defining a first opening on a first end (4286) and a second opening on a second end (4287)_and a plug (4283; 5283; 6283; 7783) extending from the first end (4286);
a first frame component bonded to the compression moldable connecting collar (4280; 5280; 6280), the first frame component having a rail portion, a first end inserted in the first opening of the connecting collar (4280; 5280; 6280), an opening in the first end for receiving the plug (4283; 5283; 6283) and a second end; and
a second frame component bonded to the compression moldable connecting collar (4280; 5280; 6280; 7780), the second frame component having a rail portion, a first end inserted in the second opening of the connecting collar (4280; 5280; 6280; 7780) and a second end.

2. The conveyor frame of claim 1, further comprising a melted bonding disc (5485) filling voids between the first frame component and the compression moldable connecting collar.

3. The conveyor frame of claim 1, wherein the first frame component includes an integral side wall portion extending up from the rail portion; or wherein the first frame component includes curved rails extending perpendicular to the rail portion to form returnway rails.

4. The conveyor frame of claim 1, wherein the first end of the first frame component (7710) includes a chamfered tapering portion and a narrowed portion.

5. The conveyor frame of claim 1, wherein the rail portion of the first frame component includes a flat top surface.

6. The conveyor frame of claim 1, wherein the second frame component (4230) includes a lower portion extending down from the rail portion to form a leg of the conveyor frame.

7. A method of joining two conveyor frame components together, comprising:
placing a connecting collar over a first end of a first conveyor frame component, such that a plug extending from a first end of the connecting collar is inserted in an opening in the first end of the first conveyor frame component;
applying heat and pressure to the connecting collar and the first end of the first conveyor frame component to bond the connecting collar to the first conveyor frame component; and
inserting a first end of a second conveyor frame component in a second end of the connecting collar and applying heat and pressure to bond the second conveyor frame component to the connecting collar.

8. The method of claim 7, wherein the connecting collar is formed of UHMW or wherein the connecting collar comprises a tubular outer wall configured to overlie the end of the first conveyor frame component and a central core.

9. A connecting collar for joining a first conveyor frame component to a second conveyor frame component, comprising:
a tubular outer wall extending from a first end to a second end to define a first opening on the first end and a second opening on the second end;
a central core within the tubular outer wall between the first end and the second end;
a plug extending through the central core within the tubular outer wall, the plug extending beyond the first end and second end,
wherein the connecting collar is formed of a compression moldable material.

10. The connecting collar of claim 9, wherein the tubular outer wall comprises a rounded rail portion having a flat top surface and an integral side wall portion extending up from the rounded rail portion.

11. The use of the connecting collar of any one of claims 9 through to 10 in a conveyor frame as set forth in any one of claims 1 through to 6.

## Patentansprüche

1. Förderrahmen (4200), umfassend:
Einen formpressbaren Anschlussbund (4280; 5280; 6280; 7780), der einen mittigen Kern (4282; 5282; 6282), Seitenwände, die eine erste Öffnung an einem ersten Ende (4286) definieren, und eine zweite Öffnung an einem zweiten Ende (4287) und einen Stopfen (4283; 5283; 6283; 7783) umfasst, der sich aus dem ersten Ende (4286) erstreckt;
eine erste Rahmenkomponente, die mit dem formbaren Anschlussbund (4280; 5280; 6280) verbunden ist, wobei die erste Rahmenkomponente einen Schienenabschnitt, ein erstes in die erste Öffnung des Anschlussbundes (4280; 5280; 6280) eingeschobenes Ende, eine Öffnung im ersten Ende zur Aufnahme des Stopfens (4283; 5283; 6283) und ein zweites Ende aufweist; und
eine zweite Rahmenkomponente, die mit dem formbaren Anschlussbund (4280; 5280; 6280; 7780) verbunden ist, wobei die zweite Rahmenkomponente einen Schienenabschnitt, ein erstes in die zweite Öffnung des Anschlussbundes (4280; 5280; 6280; 7780) eingeschobenes Ende und ein zweites Ende aufweist.

2. Förderrahmen nach Anspruch 1, der ferner eine geschmolzene Verbindungsscheibe (5485) umfassend, die Hohlräume zwischen der ersten Rahmenkomponente und dem formpressbaren Anschlussbund füllt.

3. Förderrahmen nach Anspruch 1, wobei die erste Rahmenkomponente einen integralen Seitenwandabschnitt einschließt, der sich aus dem Schienenabschnitt nach oben erstreckt; oder wobei die erste Rahmenkomponente gekrümmte Schienen einschließt, die sich senkrecht zum Schienenabschnitt erstrecken, um Rücklaufschienen zu bilden.

4. Förderrahmen nach Anspruch 1, wobei das erste Ende der ersten Rahmenkomponente (7710) einen abgeschrägten, sich verjüngenden Abschnitt und einen verengten Abschnitt einschließt.

5. Förderrahmen nach Anspruch 1, wobei der Schienenabschnitt der ersten Rahmenkomponente eine flache Oberfläche einschließt.

6. Förderrahmen nach Anspruch 1, wobei die zweite Rahmenkomponente (4230) einen unteren Abschnitt einschließt, der sich aus dem Schienenabschnitt nach unten erstreckt, um ein Bein des Förderrahmens zu bilden.

7. Verfahren zur Verbindung von zwei Förderrahmenkomponenten, umfassend:
Platzieren eines Anschlussbundes über ein erstes Ende einer ersten Förderrahmenkomponente, sodass ein Stopfen, der sich aus einem ersten Ende des Anschlussbundes erstreckt, in eine Öffnung im ersten Ende der ersten Förderrahmenkomponente geschoben wird;
Anwenden von Wärme und Druck auf den Anschlussbund und das erste Ende der ersten Förderrahmenkomponente, um den Anschlussbund mit der ersten Förderrahmenkomponente zu verbinden; und
Einschieben eines ersten Endes einer zweiten Förderrahmenkomponente in ein zweites Ende des Anschlussbundes und Anwenden von Wärme und Druck, um die zweite Förderrahmenkomponente mit dem Anschlussbund zu verbinden.

8. Verfahren nach Anspruch 7, wobei der Anschlussbund aus ultrahochmolekularem Polyethylen (UHMWPE) gebildet ist oder wobei der Anschlussbund eine röhrenförmige Außenwand umfasst, die so konfiguriert ist, dass sie über dem Ende der ersten Förderrahmenkomponente und einem mittigen Kern liegt.

9. Anschlussbund zur Verbindung einer ersten Förderrahmenkomponente mit einer zweiten Förderrahmenkomponente, umfassend:
eine röhrenförmige Außenwand, die sich aus einem ersten Ende zu einem zweiten Ende erstreckt, um eine erste Öffnung am ersten Ende und eine zweite Öffnung am zweiten Ende zu definieren;
einen mittigen Kern innerhalb der röhrenförmigen Außenwand zwischen dem ersten Ende und dem zweiten Ende;
einen Stopfen, der sich durch den mittigen Kern innerhalb der röhrenförmigen Außenwand erstreckt, wobei sich der Stopfen über das erste Ende und das zweite Ende hinaus erstreckt,
wobei der Anschlussbund aus einem formpressbaren Material gebildet ist.

10. Anschlussbund nach Anspruch 9, wobei die röhrenförmige Außenwand einen gerundeten Schienenabschnitt, der eine flache Oberfläche aufweist, und einen integralen Seitenwandabschnitt umfasst, der sich aus dem gerundeten Schienenabschnitt nach oben erstreckt.

11. Verwendung des Anschlussbundes irgendeines der Ansprüche 9 bis 10 in einem Förderrahmen wie in irgendeinem der Ansprüche 1 bis 6 dargelegt.

## Revendications

1. Cadre de transporteur (4200), comprenant :
un collier de liaison moulé par compression (4280 ; 5280 ; 6280 ; 7780) comportant un noyau central (4282, 5282, 6282), des parois latérales définissant une première ouverture située à hauteur d'une première extrémité (4286) et une seconde ouverture située à hauteur d'une seconde extrémité (4287) et une cheville (4283 ; 5283 ; 6283 ; 7783) partant de la première extrémité (4286) ;
un premier composant de cadre lié au collier de liaison moulé par compression (4280 ; 5280 ; 6280), le premier composant de cadre comportant une section de rail, une première extrémité insérée dans la première ouverture du collier de liaison (4280 ; 5280 ; 6280), une ouverture située à hauteur de la première extrémité pour y recevoir la cheville (4283 ; 5283 ; 6283) ainsi qu'une seconde extrémité ; et
un second composant de cadre lié au collier de liaison moulé par compression (4280 ; 5280 ; 6280 ; 7780), le second composant de cadre comportant une section de rail, une première extrémité insérée dans la seconde ouverture du collier de liaison (4280 ; 5280 ; 6280 ; 7780) ainsi qu'une seconde extrémité.

2. Cadre de transporteur selon la revendication 1, comprenant en outre un disque de collage fondu (5485) remplissant les vides existant entre le premier composant de cadre et le collier de liaison moulé par compression.

3. Cadre de transporteur selon la revendication 1, dans lequel le premier composant de cadrer comprend une partie de paroi latérale intégrée s'étendant vers le haut à partir de la section de rail ; ou dans lequel le premier composant de cadre comporte des rails courbés s'étendant perpendiculairement par rapport à la section de rail pour former des rails de retour.

4. Cadre de transporteur selon la revendication 1, dans lequel la première extrémité du premier composant de cadre (7710) comprend une partie s'effilant chanfreinée et une partie rétrécie.

5. Cadre de transporteur selon la revendication 1, dans lequel la section de rail du premier composant de cadre comprend une surface supérieure plane.

6. Cadre de transporteur selon la revendication 1, dans lequel le second composant de cadre (4230) comprend une partie inférieure s'étendant vers le bas à partir de la section de rail pour former une branche du cadre de transporteur.

7. Procédé d'assemblage de deux composants de cadre de transporteur, consistant à :
placer un collier de liaison sur une première extrémité d'un premier composant de cadre de transporteur, de sorte qu'une cheville partant d'une première extrémité du collier de liaison soit insérée dans une ouverture située à hauteur de la première extrémité du premier composant du cadre de transporteur ;
appliquer de la chaleur et une pression sur le collier de liaison et sur la première extrémité du premier composant du cadre de transporteur pour lier le collier de liaison au premier composant du cadre de transporteur ; et
insérer une première extrémité d'un second composant du cadre de transporteur dans une seconde extrémité du collier de liaison et appliquer de la chaleur et une pression pour lier le second composant du cadre de transporteur au collier de liaison.

8. Procédé selon la revendication 7, dans lequel le collier de liaison est fabriqué à partir d'UHMW ou dans lequel le collier de liaison comprend une paroi externe tubulaire configurée pour recouvrir l'extrémité du premier composant du cadre de transporteur et un noyau central.

9. Collier de liaison destiné à joindre un premier composant du cadre de transporteur et un second composant du cadre de transporteur, comprenant :
une paroi externe tubulaire partant d'une première extrémité jusqu'à une seconde extrémité pour définir une première ouverture à hauteur de la première extrémité ainsi qu'une seconde ouverture à hauteur de la seconde extrémité ;
un noyau central au sein de la paroi externe tubulaire entre la première extrémité et la seconde extrémité ;
une cheville traversant le noyau central au sein de la paroi externe tubulaire, la cheville s'étendant au-delà de la première extrémité et de la seconde extrémité,
dans lequel le collier de liaison est fabriqué à partir d'un matériau moulable par compression.

10. Collier de liaison selon la revendication 9, dans lequel la paroi externe tubulaire comprend une section de rail arrondi comportant une surface supérieure plane et une partie de paroi latérale intégrée s'étendant vers le haut à partir de la section de rail arrondi.

11. Utilisation du collier de liaison selon l'une quelconque des revendications 9 à 10 dans un cadre de transporteur selon l'une quelconque des revendications 1 à 6.
